Europäisches Patentamt

(19) European Patent Office

Office européen des brevets

(11) Publication number: **0 209 937**
**B1**

## EUROPEAN PATENT SPECIFICATION

(12)

(51) Int. Cl.⁵: **A23F 3/18, A23F 5/26**
**// A23L2/04**

(45) Date of publication of the patent specification:
**13.06.90**

(21) Application number: **86201181.4**

(22) Date of filing: **04.07.86**

(54) A process and an apparatus for preparing a cold beverage.

(30) Priority: **05.07.85 NL 8501927**

(43) Date of publication of application:
**28.01.87 Bulletin 87/5**

(45) Publication of the grant of the patent:
**13.06.90 Bulletin 90/24**

(84) Designated Contracting States:
**AT BE CH DE FR GB IT LI LU NL SE**

(56) References cited:
**EP-A- 0 110 391**
**BE-A- 538 319**
**FR-A- 318 699**
**FR-A- 941 893**
**GB-A- 540 214**
**GB-A- 644 483**
**US-A- 2 785 979**

(73) Proprietor: **Douwe Egberts Koninklijke Tabaksfabriek-Koffiebranderijen-Theehandel N.V., Keulsekade 143, NL-3532 AA Utrecht(NL)**

(72) Inventor: **Bok, Rinke, Woerdlaan 22, NI-3454 VK De Meern(NL)**

(74) Representative: **Smulders, Theodorus A.H.J., Ir. et al, Vereenigde Octrooibureaux Nieuwe Parklaan 107, NL-2587 BP 's-Gravenhage(NL)**

ACTORUM AG

## Description

The present invention relates to a process and an apparatus for preparing a cold beverage from vegetable cellular material by extraction of the cellular material with water, wherein the material is wetted in a first treatment and then subjected in a second treatment to an extraction, as well as to an apparatus suitable for performing such a process.

There has been a need for a long time already for methods of preparing beverages of vegetable cellular materials, such as coffee, tea and/or herbs by means of extraction with cold water. In particular when making ice tea and ice coffee, there is the problem that in general, first tea or coffee is made by extraction with hot water, which liquid is then to be cooled. This is naturally a highly time-consuming method. An alternative is formed by a process in which first a concentrate is prepared by using only a part, e.g. half the normally required quantity of water, which extract is then diluted and cooled with cold water and/or ice cubes.

Use of the latter process for tea, however, has the disadvantage that in the preparation of the concentrated tea extract, a part of the substances are extracted, which cause haze when the liquid is cooled. The colder the tea, the hazier the liquid becomes. This haze is intensified when lemon is added with a view to the flavour. Also when preparing coffee and/or herb beverages, this process has the drawback that undesirable substances may get into the liquid, which adversely affect flavour and/or appearance. Moreover, the process is rather elaborate and time-consuming.

Much work has been carried out already to solve this problem. An example thereof is described in European patent application no. 135,222, laid open to public inspection, wherein black tea leaves are subjected to an enzymatic treatment with water containig tannase and one or more cell wall degrading enzymes. This treatment of the tea allows to obtain an instant tea that is better soluble in cold water. However, this process has the drawback that a special enzymatic pre-treatment of the tea is necessary. The enzymes employed should then be deactivated with a base, followed by heating.

It is observed in this connection that various publications disclose the preparation of cold soluble tea powders. European patent application 110,391 describes a process wherein black tea leaves are first macerated with water having a temperature of 15-40°C, followed by an extraction with cold water and an extraction with hot water. The hot and cold extract are combined to obtain an optimum extraction. Maceration should take at least 20 min., preferably 40 min. up to 2½ hours.

GB 540 214 discloses a process for making coffee or tea tablets, wherein hot water is added to a quantity of tea or coffee so that this is properly immersed. After mixing, cold water is added and the mixture is stored in an air-tight container for 24 hours. The resulting extract is dried and pressed into tablet form.

It is an object of the present invention to provide a simple and quick process for preparing a cold beverage from vegetable cellular material, wherein only water is used.

The present invention is directed to a process for preparing a cold beverage from vegetable cellular material by extraction thereof with water substantially in two stages, the first stage comprising wetting the vegetable cellular material with water having a temperature of at least 50°C, and the second stage comprising the subjecting of the wetted vegetable material to an extraction with cold water having a temperature of at most 30°C.

The upper limit of the temperature of the water for wetting is not very critical, but in general no water will be used having a temperature exceeding 100°C. Preferably, the temperature of the water, however, is close to 100°C, more in particular between 80 and 100°C. In this connection, it is observed that the use of steam for wetting purposes is possible as well.

The thus wetted vegetable cellular material is then extracted with water having a temperature of maximally 30°C. The lower limit of the water temperature is mainly determined by its freezing point, so that, in general, one will not come far below 0°C. Only in the case that use is made of water with dissolved substances, such as sugar, is it possible to employ water having a temperature below 0°C. In general, the water temperature will range between 0°C and 20°C.

Surprisingly, it has been found that the process according to the present invention allows to obtain a rapid and effective extraction of the colour and aroma products from the vegetable cellular material. Comparison of the process according to the present invention with e.g. a process wherein the cellular material is wetted with cold water, followed by extraction with cold water or only extraction with cold water, teaches that according to the present invention a much better and quicker extraction is obtained.

The duration of the extraction is mainly determined by the required strength of the beverage but in general is not more than 15 min., more in particular not more than 5 min., since longer durations do not provide much more extraction. The lower limit of the extraction time depends on the method used but in general is minimally 0.5 min.

It has been found that on application of the process according to the present invention, vegetable cellular material can be extraced in a simple manner, during which no or practically no undesirable substances are co-extracted. This is advantageous particularly with tea since a clear product is demanded, while in the conventional methods on the other hand haze may easily occur.

It is highly surprising that the simple process according to the present invention allows to obtain such good results, in particular when it is taken into account, that according to the state of the art considerably more extraction stages are proposed, using appreciably longer periods.

According to a preferred embodiment of the process according to the present invention, the quantity of hot water for wetting the vegetable cellular material is 0.25 to 10 grams per gram of vegetable cellular material. More in particular, the cellular material wetted with hot water is left in contact with this water for about 0.1-10 min. The advantage of this step is that an appreciably better extraction is obtained than when the extraction with cold water takes place practically immediataly after the wetting with hot water.

In the process according to the present invention, it is essential that after the wetting, the cellular material is not dried to the original moisture content or less, since otherwise the advantages are not attained. In general, the quantity of cold water is 15-100, preferably 25-100 gram per gram of non-wetted vegetable cellular material. By non-wetted vegetable cellular material is understood the material before it is wetted with hot water. It is possible therefore that this cellular material contains itself a slight quantity, e.g. a few percents, of moisture.

The ratio of the quantity of water for wetting to the quantity of water for extracting is from 1:2 to 1:200. In general, this ratio is from 1:10 to 1:50.

The present extraction can be performed with all kinds of vegetable cellular material, such as black tea, green tea, partly fermented tea, herbs and also coffee. It is also possible to apply the process according to the present invention to dried fruits.

The process according to the present invention is employed preferably with coffee or tea, particularly with tea, since then the advantages are clearest.

When vegetable leaf material is used, such as the various kinds of tea and herbs, the process according to the present invention can be carried out with the leaf material as such or in entirely or partly reduced form. Naturally, coffee is extracted preferably in ground form.

It is possible to wet and extract the vegetable cellular material in loose form, but it is also possible to start from packaged material e.g. in a tea bag or in a filter, e.g. as described in European patent application No. 114717, laid open to public inspection. Ground coffee can be wetted and extracted advantageously in an ordinary filter of cellulose material.

When tea in bags is used, it is also possible to employ aroma substances in the tea bag. Examples thereof are lemon or other fruit flavours, such as orange, cherry, grapefruit and the like.

The present process can be used for the preparation in small numbers of consumption units of cold beverages, e.g. for restaurants, canteens and the like, but is also possible to employ the process- with appreciably additional advantages-for the large scale preparation of cold beverages, e.g. in a factory, wherein the resulting product is subsequently packaged in smaller units, such as bottles or tins. Such an application offers the substantial advantage that only a limited quantity of hot water is necessary, while the major portion of water to be used need not be heated. The energy requirement of such a process, consequently, is much lower. Moreover, the process can also be performed more quickly, due to the absence of a cooling step.

Relative to the known processes, based on hot extraction followed by cooling, the present invention also has the major advantage that the danger of microbial contamination or deterioration is drastically reduced in that the process is not subjected to the temperature range of about 25-45°C dangerous for contamination and deterioration.

An extraction liquid is preferably used water, but it is also possible to start from an aqueous solution, e.g. sugar and/or a sweetener in water, while for preparing aerated beverages, it is also possible to start from aerated water. It is then not necessary that the same liquid is used for wetting and extraction. It is quite well possible, and even recommendable, to wet with hot water, while the extraction then takes place with carbon dioxide and/or sugar-containing water. Besides the above components, the water may also contain a flavorant, e.g. lemon juice. However, it is also possible to add the substances as sugar, sweeteners, carbon dioxide and flavorants afterwards.

It is advantageous for the preparation of an aerated beverage to perform the extraction proper in stages, i.e. in a first stage with non-aerated cold water, e.g. in a quantity of about half the eventual total quantity, followed by a second stage wherein aerated water is added. This has the advantage that there are no problems with condensation of $CO_2$ on the vegetable cellular material to be extraced.

It is observed that US patent 2,785,979 discloses a process wherein tea is extracted in a number of stages. One of these stages implies the treatment of the leaves with steam to destroy any spores and bacteria present and to prevent oxidative changes. This steaming takes place in an autoclave under pressure. As first stage of the process according to this US patent, the leaves thus steamed are immediately cooled and extracted with boiled and cooled cold water. Subsequently, a number of additional stages take place for extracting the tea sufficiently. According to the present invention, however, hot water wetting takes place only in a first stage, and in a second stage extraction with ordinary cold water. Subsequent stages are superfluous in the present invention.

The present invention also relates to a machine for supplying separate consumption units of a cold beverage according to the process of the invention, comprising a container for vegetable cellular material, means for wetting said material with water having a temperature of at elast 50°C, means for extracting said wetted vegetable material for a period of 0.1 to 15 min. with water of at most 30°C, and means for discharging the extract.

Relative to the conventional vending machines, in the apparatus according to the present invention, first the cellular material is wetted with hot water, whereupon it can preferably stew. Only a tiny portion of the liquid, i.e. only the first portion, is heated.

The apparatus according to the present invention can be designed both in the form for domestic use and for supplying in quick succession separate consumption units. In the latter case, it concerns particularly coffee and tea vending machines installed in enterprises and canteens.

The apparatus according to the present invention is constructed in principle in such a manner that the process according to the present invention, or the preferred embodiments thereof, can be performed therein.

The present invention will now be illustrated hereinafter by means of some non-limitative examples.

Examples I and II, and comparative Examples 1-4

The following Table includes the results of a number of experiments wherein always 4 grams of black tea were extracted with 200 ml of water in total. The extraction always took two minutes, with the exception of Example 2, wherein the extraction took 4 minutes, while in the experiments with wetting, the tea was stewed for two minutes.

<center>TABLE</center>

| | Wetting | | Extraction | | |
|---|---|---|---|---|---|
| Example | Quantity of water (ml) | temp. water °C | Quantity of water (ml) | Temp. water °C | Dry matter (wt. %) |
| 1 | – | – | 200 | 15 | $0.12/0.17^x$ |
| $2^{xx}$ | – | – | 200 | 15 | 0.20 |
| 3 | 5 | 15 | 195 | 15 | 0.22 |
| 4 | 10 | 15 | 190 | 15 | 0.22 |
| I | 5 | 95 | 195 | 15 | 0.34 |
| II | 10 | 95 | 190 | 15 | 0.39 |

[x] duplicate values
[xx] 4 minutes extraction

The percentage of dry matter, being a measure for the extraction, was determined by means of density measurement.

The above Table clearly shows that by applying the invention, a substantial improvement of the extraction output is obtained. The liquid obtained in Examples I and II were clear and had a good flavour.

**Claims**

1. A process for preparing a cold beverage from vegetable cellular material by extraction thereof with water substantially in two stages, the first stage comprising wetting the vegetable cellular material with water having a temperature of at least 50°C, and the second stage comprising the subjecting of the wetted vegetable material to an extraction with cold water having a temperature of at most 30°C.

2. A process according to claim 1, characterized in that the quantity of hot water is 0.25 to 10 grams per gram of vegetable cellular material.

3. A process according to claim 1 or 2, characterized in that extractions with cold water takes place for at most 15 min., more in particular 5 min.

4. A process according to claims 1–3, characterized in that extraction with cold water takes place for minimally 0.5 min.

5. A process according to claims 1–4, characterized in that the cellular material wetted with hot water is caused to stew for 0.1 to 10 minutes.

6. A process according to claims 1–5, characterized in that the quantity of cold water is 15 to 100 grams, preferably 25 to 100 grams per gram of non-wetted vegetable cellular material.

7. A process according to claims 1–6, characterized in that the vegetable cellular material is chosen from the group consisting of black tea, green tea, partly fermented tea, herbs and coffee.

8. Machine for supplying separate consumption units of a cold beverage according to the process of claim 1, comprising a container for vegetable cellular material, means for wetting said material with water having a temperature of at least 50°C, means for extracting said wetted vegetable material for a period of 0.1 to 15 min. with water of at most 30°C, and means for discharging the extract.

## Patentansprüche

1. Verfahren zum Herstellen eines Kaltgetränks aus pflanzlichem Zellmaterial durch Extraktion mit Wasser im wesentlichen in zwei Stufen, wobei die erste Stufe das Einnässen des pflanzlichen Zellmaterials mit Wasser einer Temperatur von wenigstens 50°C umfaßt, und wobei die zweite Stufe das Unterwerfen des eingenäßten pflanzlichen Materials einer Extraktion mit kaltem Wasser mit einer Temperatur von höchstens 30°C umfaßt,

2. Verfahren nach Anspruch 1, dadurch gekennzeichnet, daß die Menge heißen Wassers 0,25 bis 10 Gramm pro Gramm pflanzlichen Zellmaterials beträgt.

3. Verfahren nach Anspruch 1 oder 2, dadurch gekennzeichnet, daß die Extraktion mit kaltem Wasser für höchstens 15 min. stattfindet, genauer für 5 min.

4. Verfahren nach einem der Ansprüche 1 bis 3, dadurch gekennzeichnet, daß die Extraktion mit kaltem Wasser für mindestens 0,5 min. stattfindet.

5. Verfahren nach einem der Ansprüche 1 bis 4, dadurch gekennzeichnet, daß das mit heißem Wasser eingenäßte Zellmaterial für 0,1 bis 10 Minuten gedämpft wird.

6. Verfahren nach einem der Ansprüche 1 bis 5, dadurch gekennzeichnet, daß die Menge kalten Wassers 15 bis 100 Gramm, bevorzugt 25 bis 100 Gramm pro Gramm nicht-eingenäßten pflanzlichen Zellmaterials beträgt.

7. Verfahren nach einem der Ansprüche 1 bis 6, dadurch gekennzeichnet, daß das pflanzliche Zellmaterial aus der Gruppe aus Schwarztee, grünem Tee, teilweise fermentiertem Tee, Kräutern und Kaffee ausgewählt wird.

8. Vorrichtung zum Liefern getrennter Verbrauchseinheiten eines kalten Getränkes gemäß dem Verfahren nach Anspruch 1, mit einem Behälter für pflanzliches Zellmaterial, einer Einrichtung zum Einnässen des Materials mit Wasser einer Temperatur von wenigstens 50°C, einer Einrichtung zum Extrahieren des eingenäßten pflanzlichen Materials für eine Dauer von 0,1 bis 15 min. mit Wasser von höchstens 30°C, und mit einer Einrichtung zum Auslassen des Extraktes.

## Revendications

1. Procédé de préparation d'une boisson froide à partir d'une matière cellulaire végétale, par extraction de celle-ci avec de l'eau, substantiellement en deux étapes:
   – dans la première étape on mouille la matière cellulaire végétale avec de l'eau qui est à une température d'au moins 50°C, et
   – dans la seconde étape on soumet la matière végétale mouillée à une extraction par de l'eau froide qui est à une température d'au plus 30°C.

2. Procédé selon la revendication 1, caractérisé en ce que la quantité d'eau chaude est de 0,25 à 0,10 gramme par gramme de matière cellulaire végétale.

3. Procédé selon la revendication 1 ou la revendication 2, caractérisé en ce que des extractions à l'eau froide ont lieu pendant au plus 15 minutes, plus particulièrement 5 minutes.

4. Procédé selon l'une quelconque des revendications 1 à 3, caractérisé en ce que l'extraction à l'eau froide a lieu pendant au moins 0,5 minute.

5. Procédé selon l'une des revendications 1 à 4, caractérisé en ce que la matière cellulaire mouillée à l'eau chaude est laissée en contact avec cette eau pendant 0,1 à 10 minutes.

6. Procédé selon l'une quelconque des revendications 1 à 5, caractérisé en ce que la quantité d'eau froide est comprise entre 15 et 100 grammes, de préférence entre 25 et 100 grammes, par gramme de la matière cellulaire végétale non mouillée.

7. Procédé selon l'une quelconque des revendications 1 à 6, caractérisé en ce que la matière cellulaire végétale est choisie dans l'ensemble constitué par le thé noir, le thé vert, le thé partiellement fermenté, les herbes et le café.

8. Appareil pour fournir des unités de consommation séparées d'une boisson froide selon le procédé de l'invention, appareil qui comprend un récipient pour la matière cellulaire végétale, des moyens pour mouiller ladite matière avec de l'eau portée à une température d'au moins 50°C, des moyens pour extraire ladite matière végétale mouillée pendant une période de 0,1 à 15 minutes avec de l'eau à au plus 30°C, et des moyens pour décharger l'extrait.